# EUROPEAN PATENT APPLICATION

(11) **EP 4 574 410 A1**
(43) Date of publication of application: **25.06.2025**
(21) Application number: 23854418.3
(22) Date of filing: 15.08.2023
(51) Int. Cl.: B29D 35/00

(54) **DIE CASTING MOLD FOR VULCANIZED RUBBER GLOVES, AND DIE CASTING APPARATUS**

(30) Priority: 15.08.2022 CN 202210976774
(71) Applicant: East Rock Union Limited, Beijing 100102 (CN)
(72) Inventor: WANG, Jue, Beijing 100102 (CN); ZONG, Yongjiang, Beijing 100102 (CN)
(74) Representative: Wenzel Nemetzade Warthmüller Patentanwälte Part mbB
(86) International application number: PCT/CN2023/113017
(87) International publication number: WO 2024/037517

(57) **Abstract**

Disclosed in the present invention is a die casting mold for vulcanized rubber gloves. The die casting mold comprises: a combination-type side plate mold, which has an inner cavity substantially corresponding to the shape of a human hand when in a combined state; a middle plate hand mold with a separation element, which middle plate hand mold has a main body substantially corresponding to the shape of a human hand, and the separation element arranged on the main body, wherein the middle plate hand mold is adapted for being mounted into the side plate mold so as to form a die casting cavity between a wall of the inner cavity of the side plate mold and an outer surface of the main body of the middle plate hand mold, the die casting cavity is divided into two parts by the middle plate hand mold and the side plate mold, and the middle plate hand mold further comprises a longitudinally extending rubber injection channel that extends longitudinally downwards from the upper portion of the middle plate hand mold, and a transversely extending rubber injection channel that extends transversely from the longitudinally extending rubber injection channel to a rubber outlet in the surface of the middle plate hand mold; and a flow guide plate, which is adapted for being mounted at the top of the side plate mold so as to guide an injected rubber material. The flow guide plate is provided with: a flow guide hole adapted for injecting a rubber material; and a flow guide channel for communicating the flow guide hole with the longitudinally extending rubber injection channel.

## Description

### Cross-reference to related application

This application claims the priority of the Chinese Patent Application CN202210976774.2, with the title of " Transfer molding mold for vulcanized rubber gloves and transfer molding apparatus", filed on August 15, 2022, which is incorporated herein by reference in its entirety.

### Field of the present invention

The present invention relates to a transfer molding mold for vulcanized rubber gloves and a transfer molding apparatus.

### Background of the present invention

Vulcanized rubber gloves are widely used in various industries, such as labor protection, medical, fishery, chemical defense, outdoor sports and so on. The existing vulcanized rubber gloves are mostly made by dipping process or molding process. Vulcanized rubber gloves for different uses will be produced with different kinds of rubber. Some kinds of rubber are inadaptable for dipping process, resulting in a lower production efficiency. Some gloves are required to have a length reaching to shoulders, which also results in a greatly reduced production efficiency. When it comes to dipping process, there are still issues relating to environmental protection or lower product quality.

The rubber gloves have very small thickness, and thus it is difficult to ensure the consistency of thickness when common molding process is applied, and it is difficult to achieve a thickness below 1 mm.

Whether for dipping process or common molding process, it is difficult to produce rubber gloves with lining.

An optimized production apparatus and/or process for vulcanized rubber gloves is needed in the industry.

### Summary

The present invention is applicable for rubber of any kinds and rubber gloves of any size, which may be as thin as 0.2 mm, by means of a mold with a unique design and a transfer molding process. At the same time, it can make rubber gloves of any kinds of rubber be lined with different material, making it more comfortable to wear. Under special circumstances, it may also meet the needs for keeping warm.

According to one aspect of the present invention, there is provided a transfer molding mold for vulcanized rubber glove, comprising: combined side plate molds, having an inner cavity substantially corresponding to the shape of a human hand when being in a combined state; a middle plate hand mold with a partition element, having a main body substantially corresponding to the shape of a human hand and the partition element arranged on the main body, wherein the middle plate hand mold is adapted to be mounted into the side plate molds to form a transfer molding cavity between a wall of the inner cavity of the side plate molds and an outer surface of the main body of the middle plate hand mold, and the transfer molding cavity is divided into two parts by the middle plate hand mold and the side plate molds; and wherein the middle plate hand mold further comprises a longitudinally extending rubber injection channel which longitudinally extends downwards from the upper portion of the middle plate hand mold, and a transversely extending rubber injection channel which transversely extends from the longitudinally extending rubber injection channel to a rubber outlet in the surface of the middle plate hand mold; and a flow guide plate adapted to be mounted at the top of the side plate molds to guide the injection of rubber material, and the flow guide plate is provided with a flow guide hole for injecting rubber material and a flow guide channel communicating the flow guide hole to the longitudinally extending rubber injection channel.

Preferably, the transfer molding mold for vulcanized rubber gloves further comprises a rubber injection plate, wherein the rubber injection plate is adapted to be attached to the upper part of the flow guide plate and comprises a rubber injection hole which is adapted to be connected with an external injection head to inject rubber material into the flow guide plate from outside; and the rubber injection plate is provided with a cold runner system.

Preferably, the middle plate hand mold comprises one longitudinally extending rubber injection channel, or two or more longitudinally extending rubber injection channels distributed at intervals.

Preferably, the transfer molding mold for vulcanized rubber gloves comprises a plurality of transversely extending rubber injection channels extending from each longitudinally extending rubber injection channel.

Preferably, the longitudinally extending rubber injection channel extends in a vertical direction and the transversely extending rubber injection channel extends in a horizontal direction.

Preferably, a plurality of rubber outlets, to which the plurality of transversely extending rubber injection channels extend, are provided on the surface of the middle plate hand mold in a staggered distribution.

Preferably, the longitudinally extending rubber injection channel has a diameter of 10-20 mm, and the transversely extending rubber injection channel has a diameter of 2-5 mm.

Preferably, the transfer molding mold for vulcanized rubber gloves comprises a pair of middle plate hand molds corresponding to a pair of gloves, and the side plate molds comprise two inner cavities corresponding to the pair of middle plate hand molds, the pair of middle plate hand molds are adapted to be mounted into the two inner cavities respectively, forming the transfer molding cavities for a pair of gloves.

Preferably, the partition element of the middle plate hand mold comprises a partition plate extending outwards from the main body of the middle plate hand mold; and the partition plate divides the corresponding transfer molding cavity into a left cavity and a right cavity when the middle plate hand mold is mounted into the corresponding inner cavity of the side plate molds.

Preferably, the side plate molds comprises a left side plate mold and a right side plate mold which may be fit with each other; and the partition plate separates a left cavity and a right cavity corresponding to the left side plate mold and the right side plate mold, respectively.

Preferably, the transfer molding cavity has a thickness of 0.2 mm-1 mm.

Preferably, the transfer molding mold for vulcanized rubber gloves further comprises a second hand mold without a partition element, wherein the second hand mold has substantially the same shape as the main body of the middle plate hand mold and is adapted to be mounted into the inner cavity of the side plate molds.

Preferably, an inner surface of the side plate molds has a feature adapted to bond with a rubber surface.

Preferably, the flow guide channels of the flow guide plate communicate the flow guide hole to the longitudinally extending rubber injection channels of the pair of middle plate hand molds, respectively.

According to another aspect of the present invention, there is provided a transfer molding apparatus for vulcanized rubber gloves, which comprises the transfer molding mold as above; a high-pressure injection mechanism, which is used for pressurizing prepared unvulcanized rubber compound and injecting the same into the rubber injection hole of the transfer molding mold; a mold moving mechanism, which is used for moving individual parts of the transfer molding mold according to a preset program; and a control mechanism, which is used for controlling the operations of the mold moving mechanism and the high-pressure injection mechanism.

Preferably, the transfer molding apparatus further comprises a heating device for heating the unvulcanized rubber compound.

Although the embodiments according to the present invention are described as being applicable to the transfer molding process, it may also be applicable to the injection molding process, and it also intends to cover such applications by the protection scopes of the present invention.

### Brief Description of the Drawings

The present invention will be understood more comprehensively from the following detailed description in conjunction with the accompanying drawings, in which similar elements are numbered in a similar manner, wherein:
Figure 1 is a schematic view of the transfer molding mold for vulcanized rubber gloves in a separated state according to an embodiment of the present invention.
Figure 2 is a schematic view of the transfer molding mold for vulcanized rubber gloves in a closed state according to an embodiment of the present invention.
Figure 3 is another schematic view of the transfer molding mold for vulcanized rubber gloves in a separated state according to an embodiment of the present invention.
Figure 4 is another schematic view of the transfer molding mold for vulcanized rubber gloves in a closed state according to an embodiment of the present invention.
Figure 5 is a schematic view of the transfer molding mold for vulcanized rubber gloves in a separated state when finished according to one embodiment of the present invention.
Figure 6 is a schematic view of rubber gloves produced by the transfer molding mold for vulcanized rubber gloves according to an embodiment of the present invention.
Figure 7 is a partial perspective view of the middle plate hand molds, the flow guide plates and the rubber injection plates of the transfer molding mold for vulcanized rubber gloves according to an embodiment of the present invention, illustrating the distribution of the flow guide channels and the rubber injection channel in the mold.

### Detailed Description

In the following, the technical solutions of the present invention will be further explained in detail through the embodiments in conjunction with the accompanying drawings, while the present invention shall not be limited to the following embodiments.

In view of the defects of rubber gloves produced by dipping process and common molding process in the prior art, the present invention provides a transfer molding mold for production of vulcanized rubber gloves, and a transfer molding apparatus.

According to the technical solution of the present invention, the technical problems to be solved include, for example: dead rubber, mold-swelling and core shift which are prone to occur when the natural rubber and synthetic rubber flow in the mold cavity for thin products (0.2-1 mm), due to its poor fluidity (compared to thermoplastic elastomer materials, such as PVC, TPR, TPU, etc.); and the production of rubber gloves with linings which is difficult to produce by common process.

The rubber gloves produced by the mold or apparatus of the present invention have unlimited length, which may reach at wrists or shoulders. The thickness may be produced to be as thin as 0.2 mm.

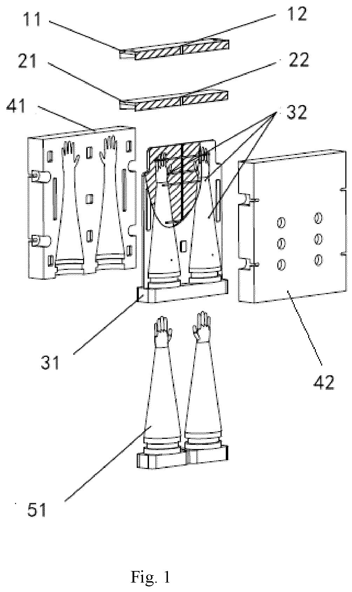

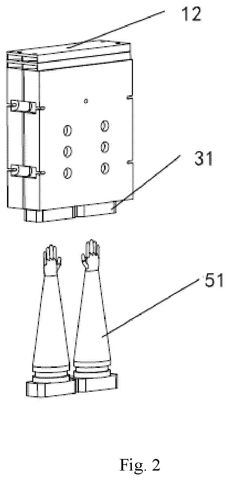

Figures. 1-7 are illustrated by the preferable way of producing a pair of gloves, while the present invention may also include the embodiment of producing a single glove, in which case, only the features corresponding to one glove, such as the inner cavity corresponding to one glove, the middle plate hand mold and the hand mold corresponding to one glove, etc, need to be retained.

Figure 1 shows a diagram of a transfer molding mold for producing vulcanized rubber gloves in the separated state according to an embodiment of the present invention.

The transfer molding mold includes side plate mold 41 and side plate mold 42 of combination-type, forming an inner cavity substantially corresponding to the shape of a human hand when they are in the combined state. Figure 1 shows non-handed gloves that do not distinguish between the left and the right hands. In this case, the side plate molds 41 and 42 are preferably two split molds which are matching and substantially symmetrical with each other. The side plate molds 41 and 42 may fit with each other through matching features and may be fastened together, for example, pressed tightly and secured by means of a hydraulic mechanism.

In other embodiments, the gloves may be handed gloves which distinguish between the left and the right hands, in which case, the side plate molds 41, 42 are matching with each other but are not symmetrical. Specifically, the respective parts of the inner cavity distributed on the two side plate molds 41, 42 are asymmetrical to each other.

In the transfer molding mold of Figure 1, the side plate molds 41 and 42 include two inner cavities corresponding to a pair of gloves, and it may be seen that both inner cavities have one half arranged in the side plate molds 41 and 42, respectively. When the side plate molds 41 and 42 are closed together, two complete inner cavities are formed.

The transfer molding mold of Figure 1 may further include a middle plate hand mold 31 provided with a partition element 33, having a main body 34 substantially corresponding to the shape of a human hand and the partition element 33 provided on the main body. The middle plate hand mold 31 is adapted to be mounted into the side plate molds 41, 42 to form a transfer molding cavity between the wall of the inner cavity of the side plate molds 41, 42 and the outer surface of the main body 34 of the middle plate hand mold 31. When the middle plate hand mold and the side plate molds are mounted into place, each transfer molding cavity is divided into two parts by the middle plate hand mold and the side plate molds.

The partition element of the middle plate hand mold is preferably a partition plate. The partition plate may be located in the middle of the main body of the middle plate hand mold along its thickness and extend outwards from the main body of the middle plate hand mold. When the middle plate hand mold is mounted into the corresponding cavity of the side plate molds, the partition plate divides the corresponding transfer molding cavity into a left cavity and a right cavity, that is, a left cavity and a right cavity corresponding to the side plate mold 41 and the side plate mold 42, respectively. The thickness of the partition plate may be, for example, 40mm or slightly thinner.

The transfer molding mold of Figure 1 includes a pair of middle plate hand molds 31 corresponding to a pair of gloves, and the pair of middle plate hand molds 31 are adapted to be mounted into two inner cavities, respectively, which are formed when the side plate molds 41 and 42 are closed together, to form transfer molding cavities for a pair of gloves.

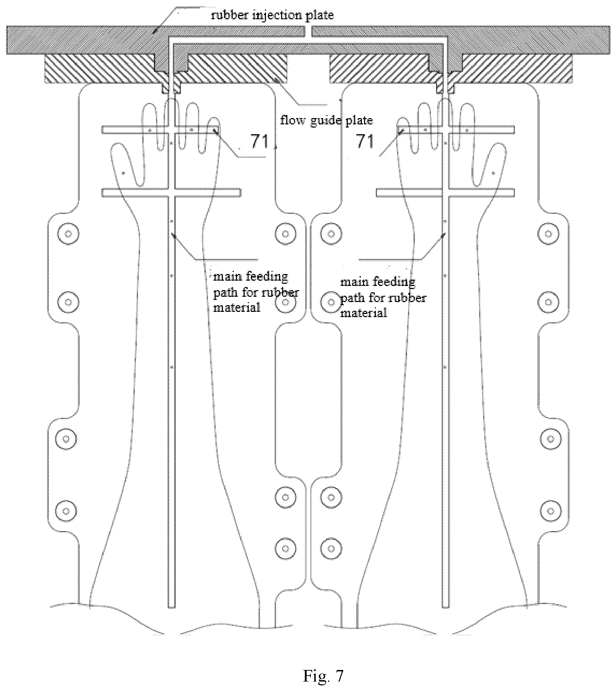

As shown in Figure 7, the middle plate hand mold 31 further includes a longitudinally extending rubber injection channel (main feeding path for rubber material) extending downwardly and longitudinally from the upper portion of the middle plate hand mold, and a transversely extending rubber injection channel extending laterally from the longitudinally extending rubber injection channel to the rubber outlet 71 on the surface of the middle plate hand mold.

The transfer molding mold according to the present invention further comprises a flow guide plate 21 which is adapted to be mounted on the top of the side plate molds to guide the injection of rubber material, and the flow guide plate is provided with a flow guide hole 22 which is adapted for injecting the rubber material, and a flow guide channel which communicates the flow guide hole to the longitudinally extending rubber injection channel.

According to a preferred embodiment of the present invention, the transfer molding mold may further include a rubber injection plate 11 which is adapted for attaching to the upper part of the flow guide plate and comprises a rubber injection hole 12, which is adapted for connecting with an external injection head to inject rubber material into the flow guide plate from outside. The rubber injection plate may be provided with a cold runner system for cooling the rubber material to prevent the forming of dead rubber.

Figure 7 is a schematic cross-sectional view of the transfer molding mold in the combined state, showing the relationship between the rubber injection holes and the rubber injection channels which communicate with each other. In other embodiments, the rubber injection plate and the flow guide plate may be formed as a single plate, which is provided with a rubber injection hole, a flow guide channel and a cold runner system.

According to the present invention, the top of the side plate molds and the bottom of the flow guide plate, as well as the top of the flow guide plate and the bottom of the rubber injection plate, are provided with connecting parts which mate with each other, and thus the rubber injection plate is adapted to be closed to the top of the flow guide plate through the connecting parts, and the flow guide plate is adapted to be closed to the top of the side plate molds through the connecting parts. The male and female parts mating with each other are schematically shown in Figure 7. It is also possible to use other connecting elements.

In the present invention, the middle plate hand mold corresponding to a single glove may include one longitudinally extending rubber injection channel, or two or more longitudinally extending rubber injection channels distributed at intervals. In the embodiment shown in Figure 7, it includes two middle plate hand molds corresponding to a pair of gloves, each including one longitudinally extending rubber injection channel or one main feeding path for rubber material.

According to a preferred embodiment of the present invention, the transfer molding mold may further include a plurality of laterally extending rubber injection channels which extend from each longitudinally extending rubber injection channel. In the embodiment of Figure 7, laterally extending rubber injection channels are arranged at the positions corresponding to the root of palm and the middle part of fingers, respectively. There is also a transversely extending rubber injection channel at the position corresponding to the arm, which is shown as extending in a forward and backward direction in Figure 7. In other embodiments, the transversely extending rubber injection channels may extend in different directions, or even in mutually staggered directions. The transversely extending rubber injection channels are provided with rubber outlets 71, through which the rubber material enters in the transfer molding cavity.

According to a preferred embodiment of the present invention, the longitudinally extending rubber injection channels extend in the vertical direction, and the laterally extending rubber injection channels extend in the horizontal direction. The plurality of rubber outlets, to which the transversely extending rubber injection channels extend, are provided on the surface of the middle plate hand mold in a staggered distribution.

The longitudinally extend rubber injection channel has a diameter of 10-20mm, and the transversely extending channel has a diameter of 2-5 mm.

When the mold is assembled, the transfer molding cavity thus formed has a thickness of 0.2-1mm.

According to the preferred embodiment of the present invention, the transfer molding mold may further include a second hand mold 51 without partition element, which has substantially the same shape as the main body 34 of the middle plate hand mold and is adapted to be mounted into the inner cavity of the side plate molds. The second hand mold 51 may be used to add glove linings to the produced gloves, which will be described in detail below.

The inner surface of the side plate molds has features adapted to bond with a rubber surface. For example, it contains material which is adapted to bond with rubber or forms a certain texture.

According to the present invention, there is also provided a transfer molding apparatus for vulcanized rubber gloves, including a transfer molding mold according to the present invention; a high-pressure injection mechanism for pressurizing the prepared unvulcanized rubber compound and injecting it into the rubber injection hole of the transfer molding mold; a mold moving mechanism for moving various parts of the transfer molding mold according to a preset program, such as various hydraulic operating mechanisms; and a control mechanism for controlling the operations of the mold moving mechanism and the high-pressure injection mechanism.

The transfer molding apparatus may further include a heating device for heating the unvulcanized rubber compound.

The operation of the transfer molding mold and transfer molding apparatus according to the present invention may refer to the following producing method.

According to another aspect of the present invention, there is provided a method for producing vulcanized rubber gloves with the transfer molding apparatus as above mentioned, including the following steps, for example:
1. Separating the parts of the side plate molds, and moving the middle plate hand mold provided with a partition element between the parts of the side plate molds.
2. Closing the side plate molds to accommodate the middle panel hand mold provided with a partition element in the side plate molds in place; the molds may be fixed in place by appropriate positioning and clamping devices, such as hydraulic or mechanical positioning and clamping devices.

For example, the middle plate hand mold provided with a partition element is positioned in the side plate molds by the engagement of its partition element or positioning steps with the positioning elements of the side plate mold. Additional fixtures may be provided in the transfer molding apparatus to fix the side plate mold and the middle plate hand molds in place. For example, it is possible to provide a hydraulic positioning means.

Figure 1 shows the middle plate hand mold provided with a partition element according to one embodiment of the present invention, which is provided with a partition element and a positioning step at the lower part, and the side plate molds with corresponding positioning steps at the lower part.

3. Positioning and fixing the flow guide plate on the top of the side plate molds, and positioning and fixing the rubber injection plate on the top of the flow guide plate.

As mentioned above, the bottom of the flow guide plate and the top of the side plate molds may be provided with positioning elements which may be engaged with each other. The transfer molding apparatus may be provided with additional fixtures therein to fix the flow guide plate, rubber injection plate and side plate molds in place. For example, it is possible to provide a hydraulic positioning means. Then, the outlet of the rubber injection channel of the rubber injection plate is communicated with the flow guide plate, and thus with the inlet of the longitudinal rubber injection channel at the top of the middle plate hand mold.

Figure 7 shows the positioning of the rubber injection plate, flow guide plate and side plate molds in this state, and the communicating state between the rubber injection hole and the rubber injection channel.

4. Injecting the rubber material into the rubber injection hole of the rubber injection plate (injecting the unvulcanized rubber compound), thereby injecting the unvulcanized rubber compound into the longitudinal rubber injection channel of the middle plate hand mold through the rubber injection channels of the rubber injection plate and the flow guide plate, and then injecting the unvulcanized rubber compound into the transverse rubber injection channels, such that the unvulcanized rubber compound enters in the transfer molding cavity between the side plate molds and the middle plate hand mold provided with a partition element. The rubber injection mechanism may maintain high pressure to enable the rubber injection process of unvulcanized rubber compound. Then, the rubber injection outlets, which are provided on the surface of the middle plate hand mold in the staggered distribution, guide the unvulcanized rubber compound into the divided transfer molding cavities, which helps to lower the pressure required for rubber injection and evenly distribute the unvulcanized rubber compound into the transfer molding cavities. The unvulcanized rubber compound in the rubber injection mechanism may be heated appropriately to enhance its flowability..

A cold runner system may be provided in the rubber injection plate to prevent the formation of dead rubber.

5. Openning the side plate molds and withdrawing the middle plate hand mold provided with a partition element.

At this point, since the unvulcanized rubber compound is molded in the divided transfer molding cavities under the action of pressure and temperature, two separate parts 61 for each glove are formed respectively. When the middle plate hand mold provided with a partition element is withdrawn, these parts 61 stay sticking to the corresponding parts of the side plate molds. For example, this may be achieved by the selection of the materials for the side plate molds and the middle plate hand mold provided with a partition element (for example, the inner surface of the side plate molds has a rougher surface), as well as by the temperature difference between the middle plate hand mold and the side plate molds, or by features (such as some textures) provided on the inner surface of the side plate molds that are easier to bond with rubber glove parts.

6. Putting a glove lining over the second hand mold without partition element and moving the same between the side plate molds.

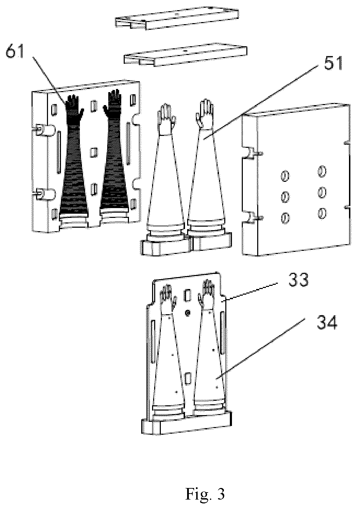

Figure 3 shows the state at this point.

7. Closing the side plate molds to accommodate the second hand mold without partition element in the side plate molds in place.

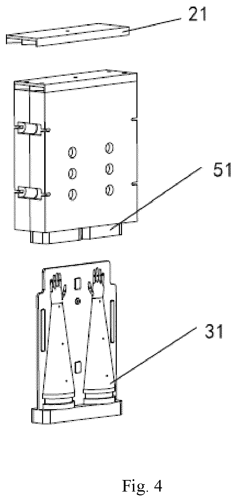

Figure 4 shows the state at this point.

The positioning of the second hand mold in the side plate molds is similar to that of the middle plate hand mold provided with a partition element as mentioned above.

At this point, the side plate molds are closed together, and thus pressurize each parts of the rubber glove and the glove lining to make them bonded together, in conjunction with the second hand mold without partition element.

Due to the side plate molds designed to be a combination type, that is, including two parts, each part of the side plate molds may be separated so as to place the middle plate hand mold or the second hand mold therein, and may be closed together to form divided transfer molding cavities in conjunction with the middle plate hand mold provided with a partition element, or to form a complete glove molding cavity in conjunction with the second hand mold without partition element. After withdrawing the middle plate hand mold provided with a partition element, the two separate parts for each glove thus formed are left on the individual parts of the side plate molds. When the second hand mold with the glove lining is interposed and the parts of the side plate molds are closed together, the two separate parts for each glove may be joined with each other and joined with the glove lining.

Pressurized gas may be provided to the surface of the second hand mold when the mold is closed by providing inflation channels within the second hand mold and supplying high-pressure gas via an external air pressure source, so as to press the glove lining, which is put over the surface of the second hand mold, against the inner face of the rubber glove, thereby promoting them bonded with each other.

8. Vulcanizing the unvulcanized rubber compound.

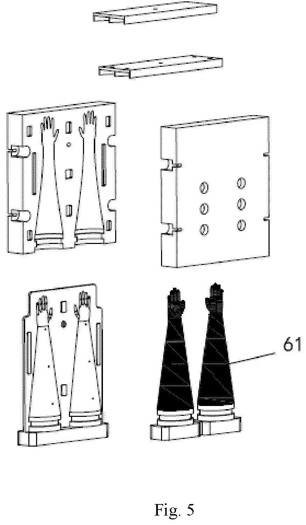

For example, vulcanization is carried out by heating the molds closed together and thus heating the rubber gloves and the second hand mold by means of arranging a heating device near the molds, and by pressurizing the rubber gloves with the above pressurized gas. At this point, various parts of the rubber gloves form complete rubber gloves together with the glove lining. Figure 5 shows the second hand mold withdrawn from the side plate molds when this step is finished, with a pair of gloves formed thereon.

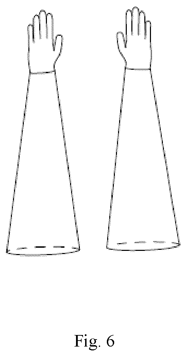

Figure 6 shows a pair of vulcanized rubber gloves made according to the present invention.

The embodiments of the present invention are not limited to those described in the above embodiments. Those skilled in the art could make various changes and improvements to the present invention in form and details without departing from the spirit and scope of the present invention, which shall be considered to fall within the protection scope of the present invention.

## Claims

1. A transfer molding mold for vulcanized rubber glove, comprising:
combined side plate molds, having an inner cavity substantially corresponding to the shape of a human hand when being in a combined state;
a middle plate hand mold with a partition element, having a main body substantially corresponding to the shape of a human hand and the partition element arranged on the main body, wherein the middle plate hand mold is adapted to be mounted into the side plate molds to form a transfer molding cavity between a wall of the inner cavity of the side plate molds and an outer surface of the main body of the middle plate hand mold, and the transfer molding cavity is divided into two parts by the middle plate hand mold and the side plate molds; and wherein the middle plate hand mold further comprises a longitudinally extending rubber injection channel which longitudinally extends downwards from the upper portion of the middle plate hand mold, and a transversely extending rubber injection channel which transversely extends from the longitudinally extending rubber injection channel to a rubber outlet in the surface of the middle plate hand mold; and
a flow guide plate adapted to be mounted at the top of the side plate molds to guide the injection of rubber material, and the flow guide plate is provided with a flow guide hole for injecting rubber material and a flow guide channel communicating the flow guide hole to the longitudinally extending rubber injection channel.

2. The transfer molding mold for vulcanized rubber gloves according to claim 1, further comprising a rubber injection plate, wherein the rubber injection plate is adapted to be attached to the upper part of the flow guide plate and comprises a rubber injection hole which is adapted to be connected with an external injection head to inject rubber material into the flow guide plate from outside; and the rubber injection plate is provided with a cold runner system.

3. The transfer molding mold for vulcanized rubber gloves according to claim 1 or 2, wherein the middle plate hand mold comprises one longitudinally extending rubber injection channel, or two or more longitudinally extending rubber injection channels distributed at intervals.

4. The transfer molding mold for vulcanized rubber gloves according to claim 1 or 2, comprising a plurality of transversely extending rubber injection channels extending from each longitudinally extending rubber injection channel.

5. The transfer molding mold for vulcanized rubber gloves according to any of claims 1-4, wherein the longitudinally extending rubber injection channel extends in a vertical direction and the transversely extending rubber injection channel extends in a horizontal direction.

6. The transfer molding mold for vulcanized rubber gloves according to claim 4, wherein a plurality of rubber outlets, to which the plurality of transversely extending rubber injection channels extend, are provided on the surface of the middle plate hand mold in a staggered distribution.

7. The transfer molding mold for vulcanized rubber gloves according to any of claims 1-4, wherein the longitudinally extending rubber injection channel has a diameter of 10-20 mm, and the transversely extending rubber injection channel has a diameter of 2-5 mm.

8. The transfer molding mold for vulcanized rubber gloves according to any of claims 1-7, comprising a pair of middle plate hand molds corresponding to a pair of gloves, and the side plate molds comprise two inner cavities corresponding to the pair of middle plate hand molds, the pair of middle plate hand molds are adapted to be mounted into the two inner cavities respectively, forming the transfer molding cavities for a pair of gloves.

9. The transfer molding mold for vulcanized rubber gloves according to any of claims 1-8, wherein the partition element of the middle plate hand mold comprises a partition plate extending outwards from the main body of the middle plate hand mold; and the partition plate divides the corresponding transfer molding cavity into a left cavity and a right cavity when the middle plate hand mold is mounted into the corresponding inner cavity of the side plate molds.

10. The transfer molding mold for vulcanized rubber gloves according to claim 9, wherein the side plate molds comprises a left side plate mold and a right side plate mold which may be fit with each other; and the partition plate separates a left cavity and a right cavity corresponding to the left side plate mold and the right side plate mold, respectively.

11. The transfer molding mold for vulcanized rubber gloves according to any of claims 1-10, wherein the transfer molding cavity has a thickness of 0.2 mm-1 mm.

12. The transfer molding mold for vulcanized rubber gloves according to any of claims 1-11, further comprising:
a second hand mold without a partition element, wherein the second hand mold has substantially the same shape as the main body of the middle plate hand mold and is adapted to be mounted into the inner cavity of the side plate molds.

13. The transfer molding mold for vulcanized rubber gloves according to any of claims 1-12, wherein an inner surface of the side plate molds has a feature adapted to bond with a rubber surface.

14. The transfer molding mold for vulcanized rubber gloves according to claim 8, wherein the flow guide channels of the flow guide plate communicate the flow guide hole to the longitudinally extending rubber injection channels of the pair of middle plate hand molds, respectively.

15. A transfer molding apparatus for vulcanized rubber gloves, comprising:
the transfer molding mold according to any of claims 1-14;
a high-pressure injection mechanism, which is used for pressurizing prepared unvulcanized rubber compound and injecting the same into the rubber injection hole of the transfer molding mold;
a mold moving mechanism, which is used for moving individual parts of the transfer molding mold according to a preset program; and
a control mechanism, which is used for controlling the operations of the mold moving mechanism and the high-pressure injection mechanism.

16. The transfer molding apparatus according to claim 15, further comprising a heating device for heating the unvulcanized rubber compound.
